# EUROPÄISCHE PATENTANMELDUNG

(11) **EP 2 460 895 A2**
(43) Veröffentlichungstag der Anmeldung: **06.06.2012**
(21) Anmeldenummer: 11192205.0
(22) Anmeldetag: 06.12.2011
(51) Int. Cl.: C21B 7/20, C21B 7/24, F27B 1/20, F27D 19/00, C21C 5/52, F27B 3/14

(54) **Metallurgisches Gefäß, insbesondere Elektrolichtbogenofen**

(30) Priorität: 06.12.2010 DE 102010053646
(71) Anmelder: SMS Siemag AG, 40237 Düsseldorf (DE)
(72) Erfinder: Ertl, Markus, 40822 Mettmann (DE); Bültena, Ralf, 45966 Gladbeck (DE)
(74) Vertreter: Klüppel, Walter

(57) **Zusammenfassung**

Die Erfindung betrifft ein metallurgisches Gefäß, insbesondere einen Elektrolichtbogenofen, mit einem die Schmelze aufnehmenden, feuerfest ausgemauerten Untergefäß und einem Obergefäß zur Aufnahme des zu schmelzenden Gutes, insbesondere Schrott, wobei das Obergefäß wassergekühlte Wandelemente aufweist.

Dabei ist vorgesehen, dass zumindest Teilbereiche der Seitenwand des Obergefäßes aus großflächigen, jeweils eine Einheit bildenden, aus feuerfestem, keramischen Material bestehenden, nicht gekühlten Wandelementen, welche jeweils als Ganzes austauschbar sind, aufgebaut sind.

## Beschreibung

Die Erfindung betrifft ein metallurgisches Gefäß, insbesondere einen Elektrolichtbogenofen, mit einem die Schmelze aufnehmenden, feuerfest ausgemauerten Untergefäß und einem Obergefäß zur Aufnahme des zu schmelzenden Gutes, insbesondere Schrott, wobei das Obergefäß wassergekühlte Wandelemente aufweist.

Bei der Ausbildung der Seitenwände von Elektrolichtbogenöfen ist es bekannt, diese als innenseitig mit feuerfestem Material ausgekleideten Blechmantel auszuführen oder wassergekühlte Wände vorzusehen. Auch Kombinationen beider Ausführungen sind bekannt. Beispiele hierfür sind die DE 28 43 881 oder die WO 93 05626.

Bei Elektrolichtbogenöfen sind die seitlichen Wandelemente hohen thermischen Belastungen, insbesondere hoher thermischer Strahlung und mechanischen Belastungen durch Stöße und Reibung durch Schrottteile ausgesetzt.

Aufgrund der erwähnten hohen thermischen und mechanischen Beanspruchungen und des dadurch bedingten Verschleißes müssen die seitlichen Wandelemente von Zeit zu Zeit ausgetauscht werden.

Zur Verringerung der durch die Neuzustellung bedingten Stillstandszeiten, die wegen der Hitzebelästigung die verhältnismäßig lange Abkühlzeit umfasst, hat man bereits den Blechmantel des Elektroofens in einzelne Teile aufgegliedert, die leicht lösbar miteinander verbunden sind. Nach Abnehmen des Blechmantels können dabei die stehen gebliebenen Reste des Seitenwandfutters von außen durch Abschlagen zerstört werden.

Gemäß dem DE 1807322 können dabei zum Ausbrechen des verschlissenen Restmauerwerks hinter dem zu erneuernden Mauerwerk gefäßseitig einzelne, senkrecht angeordnete Stahleinlagen über den Umfang verteilt eingebaut sein.

Aus der DE 1207050 ist es ferner bekannt, bei einer Ofenwand, die aus einzelnen an einem Stahltraggerüst abgestützten Steinen besteht, dass diese - nach dem Entfernen spezieller Halteeisen - einzeln nach außen gezogen und ausgewechselt werden können.

Bei modernen Lichtbogenöfen werden in der Regel wassergekühlte Wandelemente in Rohrkonstruktion aus Stahl und/oder Kupfer verwendet.

Der Einsatz wassergekühlter Wandelemente ist aber mit zahlreichen Nachteilen verbunden.
- Speziell bei größeren Öfen sind erhebliche Wassermengen zur Kühlung der Wandelemente erforderlich. Diese Wassermengen müssen von der Wasserwirtschaft bereitgestellt werden. Dazu sind Pumpen, Kühlanlagen etc. notwendig.
- Auf Grund des Ofenprozesses lassen sich Leckagen an den wassergekühlten Wandelementen nicht vermeiden. Daraus folgen die Gefahr von Explosionen und das Risiko von Verletzungen des Ofenpersonals.
- Durch den Einsatz wassergekühlter Wandelemente wird dem Einschmelzprozess Wärmeenergie entzogen.
- Der Einsatz wassergekühlter Wandelemente bedingt eine Verrohrung mit allen notwendigen Armaturen, Schläuchen, Messgeräten, etc., weiche einen erheblichen Wartungs- und Instandhaltungsaufwand, sowie eine große Ersatzteilhaltung zur Folge hat.
- Erheblicher Engineering- und Fertigungsaufwand.

Aufgabe der Erfindung ist die Vermeidung dieser Nachteile, insbesondere die Reduzierung der Investitionskosten durch Reduzierung der Kühlwassermengen am Lichtbogenofen und der damit verbundenen Möglichkeit zu Einsparungen u.a. im Bereich der Wasserwirtschaft.

Gelöst wird diese Aufgabe erfindungsgemäß durch ein metallurgisches Gefäß, insbesondere Elektrolichtbogenofen, mit einem Untergefäß und einem aus einer Kombination von wassergekühlten und ungekühlten Wandelementen bestehendem Obergefäß. Die einzelnen Wandelemente bilden jeweils eine Einheit, welche jeweils als Ganzes austauschbar sind. Vorzugsweise weisen die ungekühlten Wandelemente dem Gefäßinneren zugewandt eine homogene Schicht aus dem feuerfesten, keramischen Material auf. Zwischen dieser Schicht und einem äußeren Blechmantel befindet sich eine ebenfalls keramische dauerfeste Isoliereinlage.
An der Außenseite des Blechmantels können Haltemittel vorgesehen sein zum Verbinden der am Umfang des Gefäßes nebeneinander angeordneten, die geschlossene Gefäßwand bildenden Wandelemente.
Der Kerngedanke der Erfindung besteht darin, dass anstelle einer wassergekühlten Rohrkonstruktion, die einzelnen Wandelemente im Wesentlichen aus einer Kombination von modernen feuerfesten keramischen Materialien aufgebaut sind.

Der Einsatz bzw. die Verwendung von derartigen Wandelementen ermöglicht eine wesentliche Vereinfachung der Obergefäßaußenstruktur im Hinblick auf einfachere Montage und Demontage der Wandelemente (Demontage einzelner Elemente nach Innen - Montage neuer Elemente von Außen).

Die Kombination von ungekühlt feuerfesten mit wassergekühlten Wandelementen ist einfach möglich (z.B. an Stellen mit erhöhter Wärmebelastung).

Die Vorteile, die sich aus der erfindungsgemäßen Lösung ergeben, lassen sich wie folgt zusammenfassen:
- Verringerung der Wärmeverluste am Lichtbogenofen.
- Erhöhung der Sicherheit während des Ofenbetriebs durch Reduzierung bzw. Wegfall des Kühlwassereinsatzes am Obergefäß und der damit verbunden Gefahren durch Leckagen.
- Erhöhung der Ofenverfügbarkeit auf Grund kürzerer Wartungs-/Instandhaltungszeiten, sowie kürzere Zeiten für Wandelementwechsel.
- Verringerung der Kosten für Ersatzteillagerhaltung durch Wegfall von Schläuchen, Armaturen, Messgeräte, etc..
- Senkung der Kosten für Engineering (Zeit), Fertigung, (Zeit und Material) und für Zukaufteile.
- Erhebliche Kosteneinsparung bei Investition und Betreibung von Elektrolichtbogenöfen, bei gleichzeitiger Reduzierung von Lieferzeiten.

Die Erfindung soll nachfolgend an einem Ausführungsbeispiel erläutert werden.

Dabei zeigt:
Fig. 1 schematisch das aus einem Unter- und einem Oberteil bestehenden Gefäß eines Elektrolichtbogenofens.
Fig. 2 im oberen Teil ein erfindungsgemäßes Wandelement und im unteren Teil ein wassergekühltes Wandelement von der Außenseite gesehen und
Fig. 3 einen Längsschnitt durch die Darstellung nach Figur 2.
Fig. 4 die Draufsicht zur Darstellung nach Figur 2.
Fig. 5 einen Querschnitt durch die Darstellung nach Figur 2.

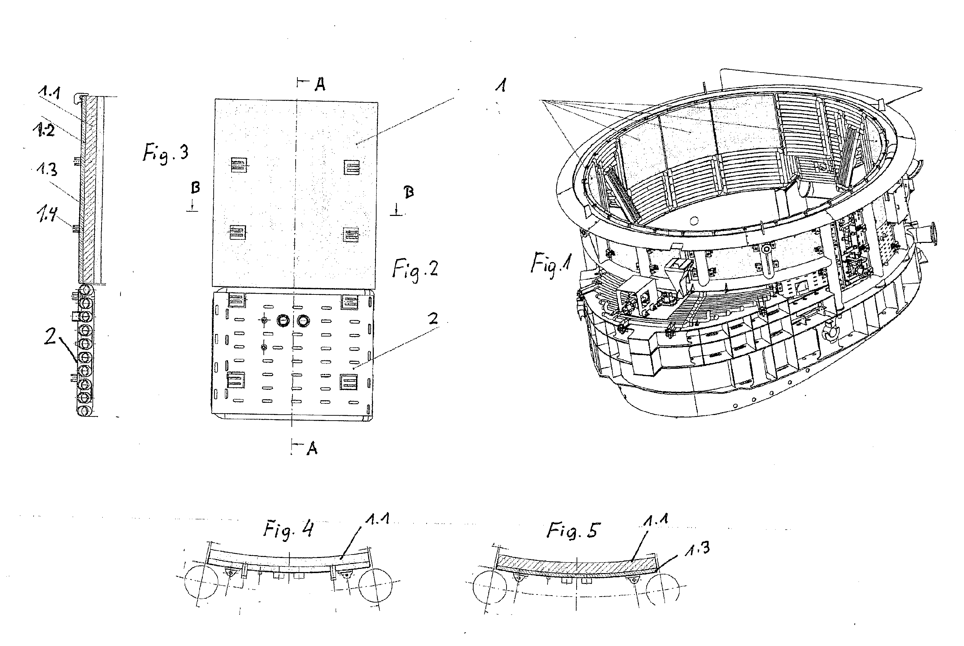

In der Figur 1 ist schematisch das Gefäß eines Elektrolichtbogenofens dargestellt, wobei hier auf die einzelnen - aus der Figur ersichtlichen - Teildarstellungen nicht eingegangen werden soll.
Die Figur zeigt aber auch, dass Teile der Seitenwand aus wassergekühlten Wandelementen 2 bestehen. Diese werden insbesondere in den am stärksten thermischen Belastungen ausgesetzten Bereichen angewandt.

Im oberen Bereich der Seitenwand sind schematisch einige der wassergekühlten Wandelemente durch erfindungsgemäße Wandelemente 1 ersetzt worden.

Im Einzelnen ist die Ausbildung dieser Wandelemente aus den Figuren 2 und 3 ersichtlich, wobei die Figur 2 die rückseitige Ansicht eines derartigen Wandelementes zeigt, also die Ansicht von der Außenseite des Gefäßes.

Dabei ist im oberen Teil das erfindungsgemäße Wandelemente 1 angeordnet, während der untere Teil aus einem wassergekühlten Wandelement 2 besteht.

Die Schnittdarstellung in der Figur 3 zeigt nun den Aufbau des gesamten Wandelementes.
Dem Gefäßinneren zugeordnet ist die feuerfeste keramische Schicht, die mit 1.1 bezeichnet ist. Zwischen dieser und dem Blechaußenmantel 1.3 befindet sich eine Isolierschicht 1.2.
Wesentlich ist, dass großflächig ausgebildet ist, d. h. es besteht nicht aus einzelnen Steinen, die zusammen ein Mauerwerk bilden.

Wenn eingangs beschrieben wurde, dass bei bekannten Ausführungen nach dem Entfernen des Blechmantels die stehen gebliebenen Reste des Mauerwerks eingerissen werden konnten, so ist im vorliegenden Fall der Austausch eines Wandpaneels als Ganzes möglich. Dadurch verringert sich der Gesamtzeitaufwand für den Austausch bzw. Ersatz eines Wandelementes durch ein Neues erheblich.

Mit 1.4 sind in der Figur 2 Haltemittel gekennzeichnet, die beim Verbinden einzelner Wandelemente in Umfangsrichtung miteinander, benutzt werden.

## Patentansprüche

1. Metallurgisches Gefäß, insbesondere einen Elektrolichtbogenofen, mit einem die Schmelze aufnehmenden, feuerfest ausgemauerten Untergefäß und einem Obergefäß zur Aufnahme des zu schmelzenden Gutes, insbesondere Schrott, wobei das Obergefäß wassergekühlte Wandelemente aufweist,
**dadurch gekennzeichnet,**
**dass** zumindest Teilbereiche der Seitenwand des Obergefäßes aus großflächigen, jeweils eine Einheit bildenden, aus feuerfestem, keramischen Material bestehenden, nicht gekühlten Wandelementen, welche jeweils als Ganzes austauschbar sind, aufgebaut sind.

2. Metallurgisches Gefäß nach Anspruch 1,
**dadurch gekennzeichnet,**
**dass** die Wandelemente dem Gefäßinneren zugewandt aus einer homogenen Schicht aus feuerfesten, keramischen Material bestehen und dass sich zwischen dieser Schicht und einem äußeren Blechmantel eine Isoliereinlage befindet.

3. Metallurgisches Gefäß nach Anspruch 2,
**dadurch gekennzeichnet,**
**dass** an der Außenseite des Blechmantels Haltemittel vorgesehen sind zum Verbinden der am Umfang des Gefäßes nebeneinander angeordneten, die geschlossene Gefäßwand bildenden Wandelemente.
